# EUROPEAN PATENT APPLICATION

(11) **EP 1 202 155 A2**
(43) Date of publication of application: **02.05.2002**
(21) Application number: 01125367.1
(22) Date of filing: 30.10.2001
(51) Int. Cl.: G06F 3/023, G06F 3/033

(54) **Electronic device for controlling a cursor**

(30) Priority: 30.10.2000 JP 2000330799; 26.06.2001 JP 2001193406
(71) Applicant: Sony Computer Entertainment Inc., Tokyo 107-0052 (JP)
(72) Inventor: Yamada, Yuji, Minato-ku, Tokyo 107-0052 (JP)
(74) Representative: Müller . Hoffmann & Partner Patentanwälte

(57) **Abstract**

An electronic device for performing an output operation according to pressing force of a button is provided. An entertainment device receives an output signal from a controller. When the button is pressed, the entertainment device obtains a pressing level, and calculates a variable time (a continuous input judging time and a continuous output interval time) on the basis of this pressing level. When an on-signal is outputted in a just previous frame, the entertainment device judges whether the frame should be turned on this time on the basis of the variable time calculated here.

## Description

### Background of the invention

The present invention relates to a technique for performing an output operation according to an input, and particularly relates to a technique for performing a different output operation according to pressing force of a button.

A key repeat function is known as an input method of an electronic device. In this key repeat function, when an arbitrary key (operating element) is continuously pressed for a predetermined time or more, it is treated like a case in which this key is repeatedly pressed (repeat). This omits labor of a continuous input of a user when it is necessary to repeatedly press the same key, etc. This function is convenient particularly when a cursor is moved, etc.

### Summary of the invention

In a conventional key repeat, a time until start of the repeat and a repeat interval are fixed.

In contrast to this, in moving the cursor, the object place for the cursor to be moved is normally determined. When the object place is far from the present cursor position, a user increases a moving speed of the cursor and wants to rapidly move the cursor to this object place. When the object place is near the present cursor position, the user wants to slowly move the cursor so as not to pass this object place. It is convenient if this movement can be controlled by an operation of the user.

Therefore, an object of the present invention is to provide a technique for performing an output operation according to pressing force of an operating element.

To achieve this object, the following processing is performed in the invention. Namely, information showing the degree of pressing force of an operating element and outputted from an input receiver having the operating element is received. An output mode is changed and outputted in accordance with the degree of the pressing force determined by the received information showing the degree of the pressing force.

### Brief description of the drawings

Fig. 1 is an explanatory view showing the external appearance of a computer system in an embodiment mode to which the present invention is applied.
Fig. 2 is an explanatory view showing a hardware construction within an entertainment device in accordance with the embodiment mode to which the invention is applied.
Fig. 3 is an explanatory view showing the external appearance of a controller in accordance with the embodiment mode to which the invention is applied.
Fig. 4 is an exploded perspective view showing a constructional example of a second operating section of the controller in accordance with the embodiment mode to which the invention is applied.
Figs. 5A to 5C are cross-sectional views showing the constructional example of the second operating section of the controller in accordance with the embodiment mode to which the invention is applied.
Fig. 6 is an explanatory view showing an equivalent circuit of a pressure sensitive element of the controller in a first embodiment mode to which the invention is applied.
Fig. 7 is an explanatory view showing the functional construction of a computer system in the first embodiment mode to which the invention is applied.
Fig. 8 is an explanatory view showing a processing procedure of the computer system in the first embodiment mode to which the invention is applied.
Fig. 9A is an explanatory view showing an output of an input receiving mechanism.
Fig. 9B is an explanatory view showing input and output periods.
Fig. 9C is an explanatory view showing a situation of a key repeat when a pressing level is 4.
Fig. 9D is an explanatory view showing the situation of the key repeat when the pressing level is 3.
Fig. 9E is an explanatory view showing the situation of the key repeat when the pressing level is 2.
Fig. 9F is an explanatory view showing the situation of the key repeat when the pressing level is 1.
Fig. 10 is an explanatory view showing a display example of an application displayed by the computer system in the first embodiment mode to which the invention is applied.
Fig. 11 is an explanatory view showing the functional construction of a computer system in a second embodiment mode to which the invention is applied.
Fig. 12 is an explanatory view showing an example of an acoustic output in the second embodiment mode to which the invention is applied.

### Detailed description of the preferred embodiment

Embodiment modes relative to a computer system applying the present invention thereto will next be explained by using the drawings.

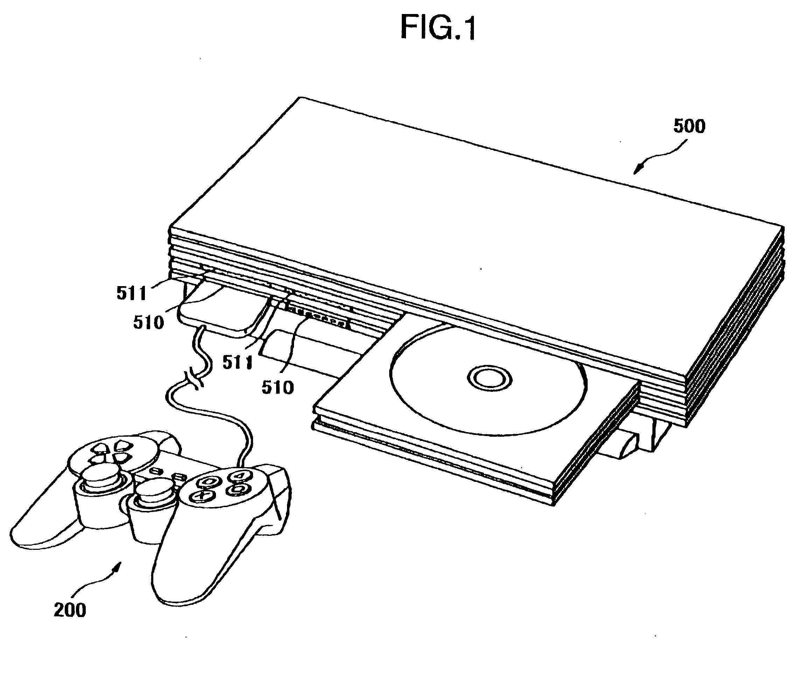

Fig. 1 shows an external appearance of the computer system 1 in this embodiment. The computer system 1 has a controller 200 as an input receiver and an entertainment device 500 as an electronic device. The entertainment device 500 has a connecting portion 510 for connection with the controller, and a connecting portion 511 of a memory card as an external memory. The controller 200 is detachably connected to the connecting portion 510. Further, the entertainment device 500 can be connected to an unillustrated display unit such as a CRT, etc.

The entertainment device 500 has a function for reading a program of a computer game from a recording medium recording this program thereto, and displaying a character to the display unit by executing this program. The entertainment device 500 also has various kinds of control functions such as DVD (digital versatile disc) replay, CDDA (compact disc digital audio) replay, etc. A signal from the controller 200 is also processed by one of the control functions within the entertainment device 500, and its contents are reflected in character of the display unit or the movement of a cursor, etc.

For example, a function for moving the character or the cursor, etc. displayed in the display unit upward, downward, leftward and rightward, etc. are allocated to the controller 200.

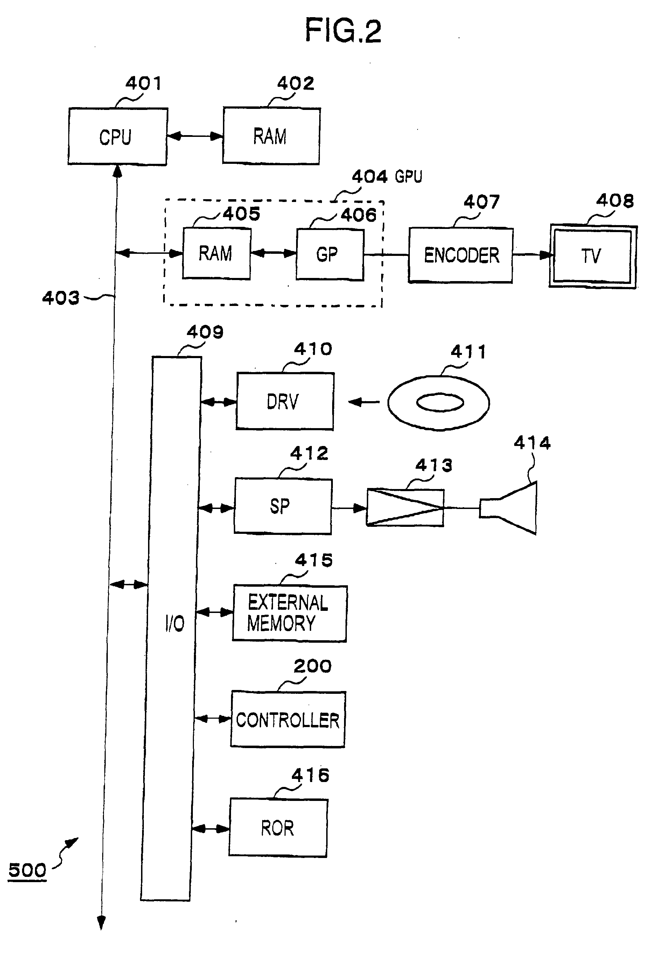

Fig. 2 is a view showing a hardware configuration within the entertainment device 500. Namely, a RAM 402 and a bus 403 are respectively connected to a CPU 401. A graphic processor unit (GPU) 404 and an input/output processor (I/O) 409 are respectively connected to this bus 403. A television monitor (TV) 408 constituting a display unit as an external device is connected to the GPU 404 through e.g., an encoder 407 for converting a digital RGB signal, etc. to a signal in an NTSC standard television system. A driver (DRV) 410 for replaying and decoding data recorded in an optical disc 411, a sound processor (SP) 412, an external memory 415 configurated by a flash memory, the controller 200 and a ROM 416 recording an operating system, etc. are respectively connected to the I/O 409. The SP 412 is connected to a speaker 414 as an external device through an amplifier 413.

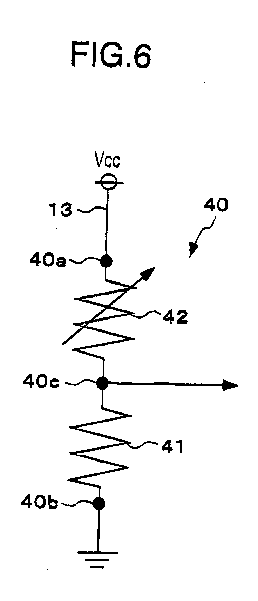

Here, for example, the external memory 415 is a memory of a card type configurated by a CPU or a gate array and a flash memory, and can be detachably attached to the entertainment device 500 shown in Fig. 6 through its connecting portion 511. The controller 200 gives commands to the entertainment device 500 by pressing plural mounted buttons. The driver 410 has a decoder for decoding an encoded image on the basis of an MPEG standard.

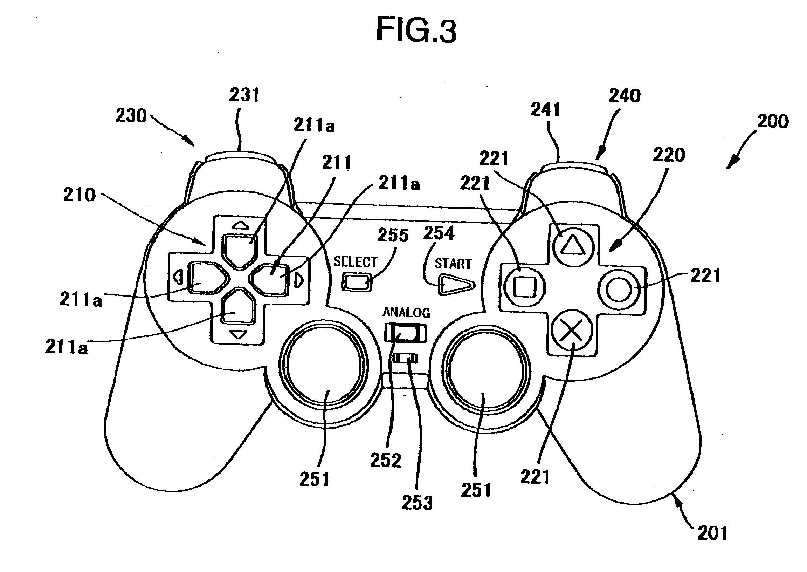

Fig. 3 is a plan view showing an external appearance of the controller 200. First and second operating sections 210, 220 are arranged on the upper face of a device body 201 of the controller 200, and third and fourth operating sections 230, 240 are arranged on side faces of the device body 201.

The first operating section 210 has an operating body 211 formed in a cross shape for a pressing operation, and each of operating keys 211a extending in four directions of this operating body 211 forms an operating element. The first operating section 210 is an operating section for giving a movement to a character displayed on the screen of a television receiver, and has a function for moving the character upward, downward, leftward and rightward by pressing and operating each operating key 211a of the operating body 211.

The second operating section 220 has four operating buttons 221 (operating elements) formed in a columnar shape for a pressing operation. An identification mark such as "○", "Δ", "□", "×", etc. is attached to a head portion of each operating button 221 so as to easily discriminate the individual operating button 221. A function of this second operating section 220 is set by a game program recorded to the optical disc 411. For example, a function for changing a state of the game character and a function for moving the cursor are allocated to each operating button 221.

The third and fourth operating sections 230, 240 approximately have the same structure, and respectively have two operating buttons 231, 241 (operating elements) for a pressing operation vertically arranged. Functions of these third and fourth operating sections 230, 240 are also set by the game program recorded to the optical disc. For example, a function for making the game character perform a special operation is allocated to these third and fourth operating sections 230, 240.

Further, two joy sticks 251 for performing an analog operation are arranged in the device body 201 shown in Fig. 3. These joy sticks 251 can be used by switching the first and second operating sections 210, 220. This switching is performed by an analog selecting switch 252 arranged in the device body 201. When the joy stick 251 is selected, a display portion 253 arranged in the device body 201 is lighted so that a selecting state of the joy stick 251 is displayed. A start switch 254 for commanding start of a game, a selecting switch 255 for selecting the degree of difficulty of the game, etc. in the game start, etc. are also arranged in the device body 201.

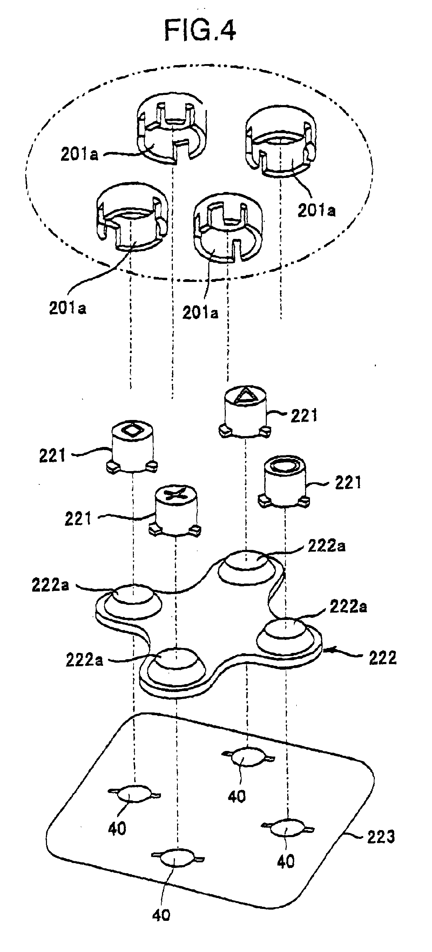

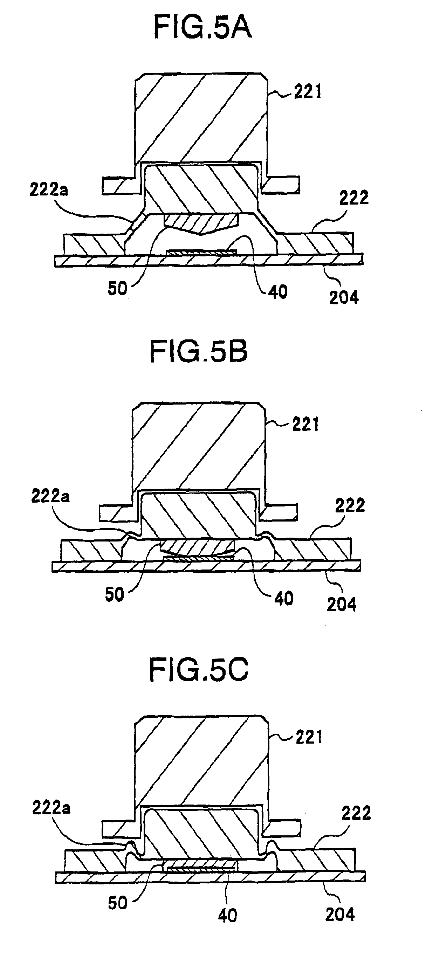

Figs. 4 and 5 are views showing a configurational example of the second operating section.

As shown in Fig. 4, the second operating section 220 has four operating buttons 221 as operating elements, an elastic body 222 and a sheet member 223 having a resistor body 40. Each operating button 221 is mounted to a mounting hole 201a formed on the upper face of the device body 201 from its rear side. Each operating button 221 mounted to the mounting hole 201a is freely moved in an axial direction.

The elastic body 222 is formed by insulating rubber, etc. and has an elastic portion 222a projected upward. A lower end of the operating button 221 is supported by an upper wall of this elastic portion 222a. When the operating button 221 is pressed-in, a slanting face portion of this elastic portion 222a is flexed and the upper wall is moved together with the operating button 221. In contrast to this, when pressing force applied to the operating button 221 is released, the slanting face portion of the flexed elastic portion 222a is elastically restored and presses-up the operating button 221. Namely, the elastic body 222 functions as a bracing-up means for restoring the operating button 221 pressed-in by the pressing operation until an original position. As shown in Fig. 5, an electroconductive member 50 is attached to a rear face of the elastic body 222.

The sheet member 223 is formed by a thin sheet material having flexible and insulating properties such as a membrane, etc. The resistor body 40 is arranged in a suitable place of this sheet member 223. The resistor body 40 and each electroconductive member 50 are respectively arranged oppositely to the operating button 221 through the elastic body 222. Namely, a pressure sensitive element is constructed by the resistor body 40 and the electroconductive member 50. An electric resistance value of the pressure sensitive element constructed by the resistor body 40 and the electroconductive member 50 is changed in accordance with the pressing force received from the operating button 221.

In a more detailed explanation, as shown in Fig. 5, the second operating section 220 has the operating button 221 as an operating element, the elastic body 222, the electroconductive member 50 and the resistor body 40. For example, the electroconductive member 50 is constructed by electroconductive rubber having an elastic property, and is formed in an angle shape having a top portion at its center. This electroconductive member 50 is adhered to an inside ceiling face of the elastic portion 222a formed in the elastic body 222.

The resistor body 40 is opposed to the electroconductive member 50 and is arranged on e.g., an internal substrate 204. As the pressing operation of the operating button 221 is performed, the electroconductive member 50 comes in contact with the resistor body 40. The electroconductive member 50 is deformed in accordance with the pressing force of the operating button 221 (namely, contact pressure with the resistor body 40) so that a contact area with the resistor body 40 is changed as shown in Figs. 5B and 5C. Namely, when the pressing force of the operating button 221 is weak, a portion of the electroconductive member 50 of an angular shape near its top portion comes in contact with the resistor body 40 as shown in Fig. 5B. When the pressing force of the operating button 221 is further strengthened, the electroconductive member 50 is gradually deformed from its top portion and the contact area is widened.

Fig. 6 is a view showing an equivalent circuit of the pressure sensitive element configured by the resistor body 40 and the electroconductive member 50. As shown in Fig. 6, the pressure sensitive element is inserted in series into a power source line 13, and a voltage Vcc is applied between electrodes 40a and 40b. As shown in Fig. 6, this pressure sensitive element is divided into a relatively small fixing resistor 41 arranged in the electroconductive member 50, and a relatively large variable resistor 42 arranged in the resistor body 40. The variable resistor 42 corresponds to a resistor provided by a portion of the resistor body 40 not coming in contact with the electroconductive member 50, and a resistance value of the pressure sensitive element is changed in accordance with the contact area of the electroconductive member 50.

Namely, when the electroconductive member 50 comes in contact with the resistor body 40, the electroconductive member 50 becomes a bridge in a contact portion so that an electric current flows through the contact portion. Therefore, the resistance value of this contact portion is reduced. Accordingly, as the contact area of the electroconductive member 50 with the resistor body 40 is increased, the resistance value of the pressure sensitive element is reduced. Thus, the pressure sensitive element can be wholly gripped as a variable resistor.

In this embodiment, an output terminal is arranged near an intermediate portion of the variable resistor 42, i.e., near an intermediate portion of the resistor body 40. Thus, a voltage dropped by the variable resistor from an applied voltage Vcc is taken out as an analog signal corresponding to the pressing force of the operating button 221.

First, since the voltage is applied to the resistor body 40 at a time of power turning-on time, a constant analog signal (voltage) Vmin is outputted from the output terminal 40c even when no operating button 221 is pressed. Next, even when the operating button 221 is pressed and operated, no resistance value of the resistor body 40 is changed until the electroconductive member 50 comes in contact with the resistor body 40. Therefore, no output voltage Vmin from the resistor body 40 is changed as it is. Further, after the operating button 221 is pressed and the electroconductive member 50 comes in contact with the resistor body 40, the contact area of the electroconductive member 50 with the resistor body 40 is increased in accordance with the pressing force of the operating button 221. Therefore, the resistance of the resistor body 40 is reduced and the analog signal (voltage) outputted from the output terminal 40c of the resistor body 40 is increased. When the electroconductive member 50 is most changed, the analog signal (voltage) outputted from the output terminal 40c of the resistor body 40 becomes a maximum Vmax.

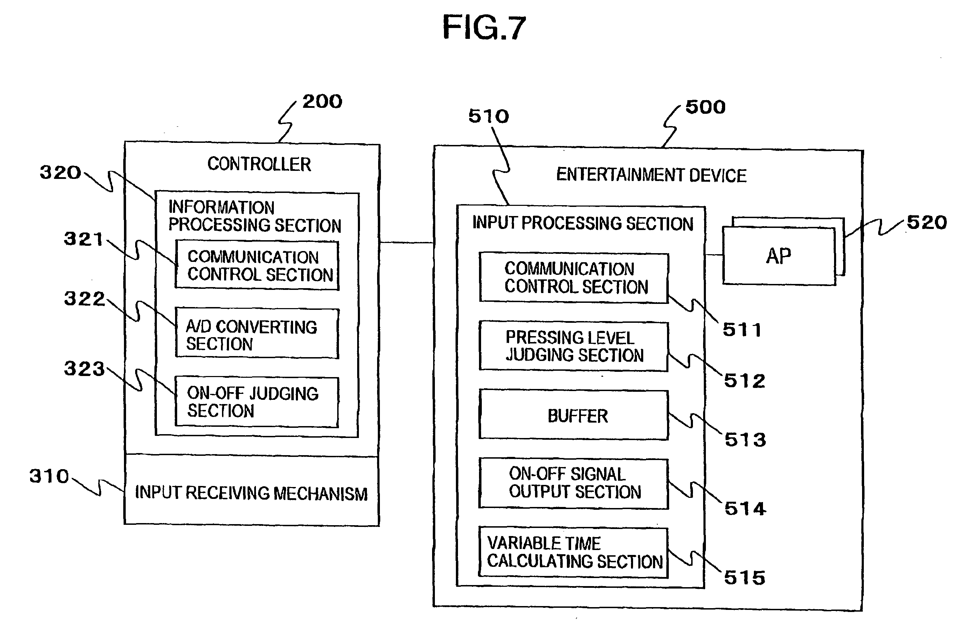

Fig. 7 shows a functional block diagram in the first embodiment for performing a key repeat according to the pressing force of an operating element by using hardware explained above. The key repeat is to perform an output operation similar to that in a discrete continuous pressing case of a certain key when this key is continuously pressed for a constant time or more.

The controller 200 has an input receiving mechanism 310 of the above-mentioned operating sections, etc., and an information processing section 320 realized by executing a predetermined program by an unillustrated MPU. The information processing section 320 further has a communication control section 321, an A/D converting section 322 and an on-off judging section 323.

The input receiving mechanism 310 outputs an analog signal (voltage) from the output terminal 40c of the resistor body 40.

The communication control section 321 controls communication with the entertainment device 500. For example, the communication control device 321 outputs information outputted from the A/D converting section 322 and the on-off judging section 323 to notify this information to the entertainment device 500. The communication control section 321 also receives commands from the entertainment device 500.

The A/D converting section 322 receives an analog signal from the input receiving mechanism 310, and converts this analog signal to a digital signal. More specifically, the A/D converting section 322 outputs the digital signal having one of values from 0 to 255 in accordance with the voltage of the analog signal. A level change of the analog signal outputted from the input receiving mechanism 310 corresponds to a change in the pressing force received from the operating button 221 (operating element) as mentioned above. Accordingly, the digital signal outputted from the A/D converting section 322 corresponds to the pressing force of the operating button 221 operated by a user. Each of this analog signal and the digital signal shows a degree of the pressing force.

The on-off judging section 323 receives the analog signal from the input receiving mechanism 310, and judges whether the operating button 221 is pressed or not. When the operating button is pressed, the on-off judging section 323 judges that the operating button is turned on. In contrast to this, when no operating button is pressed, the on-off judging section 323 judges that the operating button is turned off. The on-off judging section 323 outputs on-off information showing a judged state.

The entertainment device 500 has an input processing section 510 and an application 520 as an internal function. The input processing section 510 has a communication control section 511, a pressing level judging section 512, a buffer 513, an on-off signal output section 514, and a variable time calculating section 515.

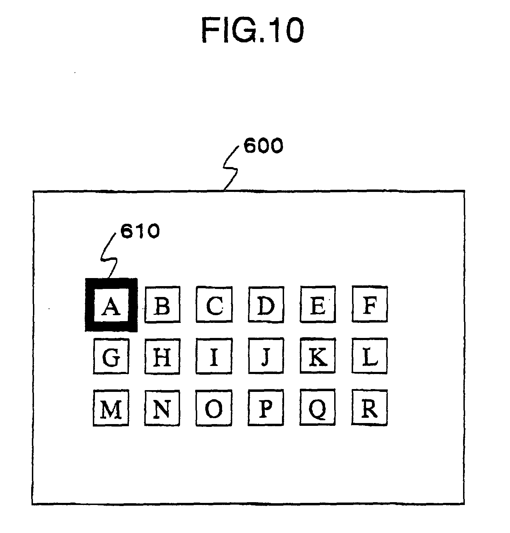

For example, the application 520 may be set such that the screen 600 shown in Fig. 10 is displayed by a display unit and an alphabetical selection is received by a cursor 610. An output mode is changed and displayed in the display unit in accordance with an output from the input processing section 510, particularly, an output from the on-off signal output section 514. More specifically, moving speed of the cursor is changed and displayed.

The input processing section 510 is realized by executing a predetermined program by the input/output processor 409. The input processing section 510 inputs and outputs data in a constant period, e.g., 1/60 second. Here, one period is called a frame. The application 520 is realized by executing a predetermined program by the CPU 401.

The communication control section 511 controls communication with the controller 200. For example, the communication control section 511 outputs commands to the controller 200. Further, the communication control section 511 receives a digital signal showing the pressing force of the operating button 221 from the controller 200 and information showing on-off of the operating button 221. This on-off information is stored to the buffer 513.

The pressing level judging section 512 judges a level of the pressing force when the operating element of the controller 200 is pressed. For example, the pressing level judging section 512 converts the digital signal showing the pressing force and showing 256 stages from 0 to 255 to a pressing level showing a degree of the pressing force. Here, the pressing level is set to four stages (pressing levels 1 to 4). The pressing level 4 shows that the pressing force is strongest. The pressing level 1 shows that the pressing force is weakest Further, the pressing level judging section 512 outputs information showing the judged pressing level. The pressing level also shows the degree of the pressing force received by the operating element.

The buffer 513 stores the on-off information received from the controller, and the kind of a signal outputted from the on-off signal output section 514. The buffer 513 has a capacity able to store the above information with respect to at least a frame equal to or longer than a longest continuous input judging time. When the capacity is limited, new information is overwritten with respect to old information in time, and may be also utilized.

The on-off signal output section 514 outputs an on-signal showing a pressing state of the operating element of the controller or an off-signal showing an unpressing state of the operating element to the application 520 in a constant period. Processing contents of the on-off signal output section 514 will next be explained.

For example, the on-off signal output section 514 receives the on-off information and information showing the pressing level. The on-off signal output section 514 discriminates whether the operating button 221 is in the on-state on the basis of the on-off information. When no operating button 221 is in the on-state, the on-off signal output section 514 outputs the off-signal. In contrast to this, when the operating button 221 is in the on-state, the on-off signal output section 514 discriminates whether the operating button 221 is in the on-state in a just previous frame with reference to the buffer 513. When no operating button 221 is in the on-state in the just previous frame, the on-off signal output section 514 judges that the operating button 221 is newly pressed, and outputs the on-signal.

When the operating button 221 is in the on-state in the just previous state, the on-off signal output section 514 judges that the on-state is continued. Further, the on-off signal output section 514 judges whether the on-state is continued for a continuous input judging time or more with reference to the buffer 513. When no on-state is continued for the continuous input judging time or more, the on-off signal output section 514 outputs the off-signal. Here, the continuous input judging time is a reference time for judging whether the key repeat is performed.

Accordingly, when the on-state is continued for the continuous input judging time or more, the on-off signal output section 514 outputs the key repeat. In the key repeat output, the on-signal is discretely outputted at the interval of a continuous output interval time. More specifically, the on-off signal output section 514 judges whether the continuous output interval time has passed after the on-signal is outputted just before. When the continuous output interval time has passed, the on-off signal output section 514 outputs the on-signal. In contrast to this, when no continuous output interval time has passed, the on-off signal output section 514 outputs the off-signal. Here, the continuous output interval time is an output interval of the on-signal when the key repeat is performed. As described next, the continuous input judging time and the continuous output interval time are variable.

The on-off signal output section 514 stores the kind of an outputted signal to the buffer 513.

The variable time calculating section 515 calculates a variable time when the key repeat is outputted. Here, there are the continuous input judging time and the continuous output interval time as the variable time. For example, the variable time calculating section 515 determines the continuous input judging time and the continuous output interval time in accordance with the pressing level reflecting the pressing force of the operating button 221. As the pressing force is strengthened, the continuous input judging time and the continuous output interval time may be set to be shortened. In contrast to this, as the pressing force is weakened, the continuous input judging time and the continuous output interval time may be set to be lengthened.

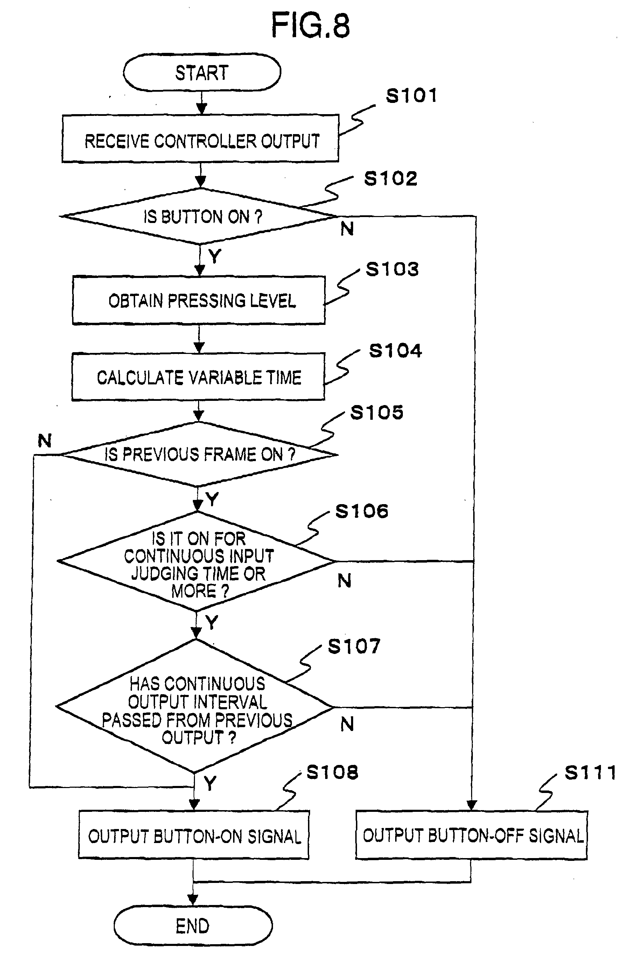

A processing procedure of the entire computer system 1 will next be explained by using Fig. 8.

When a user presses down the operating button 221 of the controller 200, a digital signal showing the on-off information and the pressing force is outputted from the controller 200. The communication control section 511 receives this digital signal (S101). The on-off signal output section 514 judges whether the operating button 221 is in the on-state from the on-off information (S102). When no operating button 221 is in the on-state, the on-off signal output section 514 outputs an off-signal (S111). In contrast to this, when the operating button 221 is in the on-state, the pressing level judging section 512 judges the pressing level on the basis of the digital signal (S103). Further, the variable time calculating section 515 obtains the pressing level, and calculates the continuous input judging time and the continuous output interval time on the basis of this pressing level (S104). The on-off signal output section 514 judges whether the operating button 221 is in the on-state in a just previous frame with reference to the buffer 513 (5105). When no operating button 221 is in the on-state in the just previous frame, the on-off signal output section 514 outputs an on-signal (S108). In contrast to this, when the operating button 221 is in the on-state in the just previous frame, the on-off signal output section 514 judges whether the on-state is continued for the continuous input judging time or more with reference to the buffer 513 (S106). When the on-state is not continued for the continuous input judging time or more, the on-off signal output section 514 outputs the off-signal (S111). In contrast to this, when the on-state is continued for the continuous input judging time or more, the on-off signal output section 514 judges whether the continuous output interval time has passed after the previous on-signal is outputted (S107). When no continuous output interval time has passed, the on-off signal output section 514 outputs the off-signal (S111). In contrast to this, when the continuous output interval time has passed, the on-off signal output section 514 outputs the on-signal (S108). The above explained processings are repeated in a constant period.

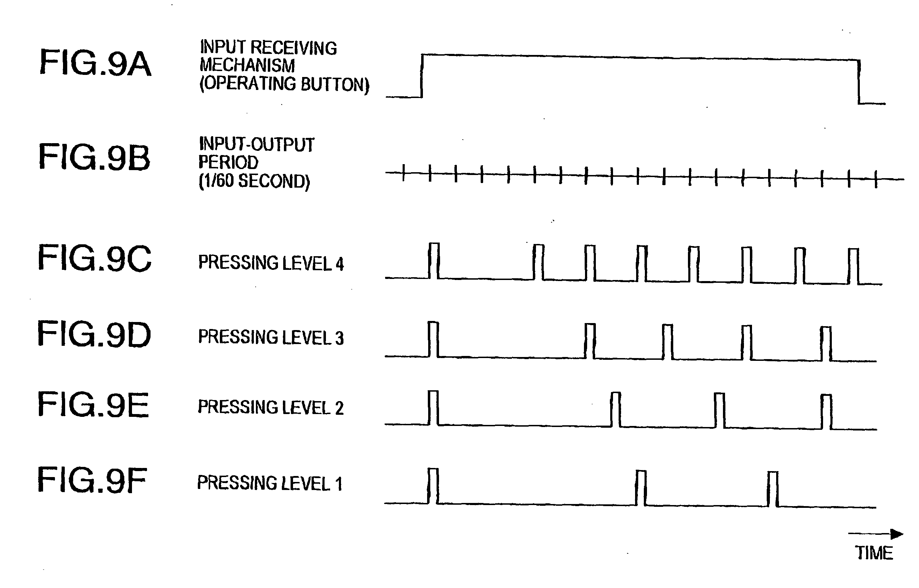

Fig. 9 shows the situation of a signal outputted by the key repeat according to the pressing force while the operating button is pressed by the above processing. Fig. 9A shows that the operating button 221 is pressed (it does not show pressing force). Fig. 9B shows input and output periods of the input processing section 510. Figs. 9C, 9D, 9E and 9F show the situation of an output signal at each of pressing levels. In each figure, a rising portion of a pulse shows an output of the on-signal. Here, the continuous input judging time and the continuous output interval time are set to be shortest at the pressing level 4, and are set to be lengthened as the pressing level is reduced. The continuous input judging time and the continuous output interval time are set to be longest at the pressing level 1.

A signal outputted from the input processing section 510 to the application 520 most early attains a continuous output state at the pressing level 4, and an output interval of the on-signal is also shortest. In contrast to this, the signal outputted from the input processing section 510 to the application 520 most lately attains the continuous output state at the pressing level 1, and the output interval of the on-signal is longest. Accordingly, when the cursor 610 displayed in the display unit is rapidly moved on the screen 600 shown in Fig. 10, the cursor 610 can be rapidly moved by strongly pressing a key for moving the cursor by a user.

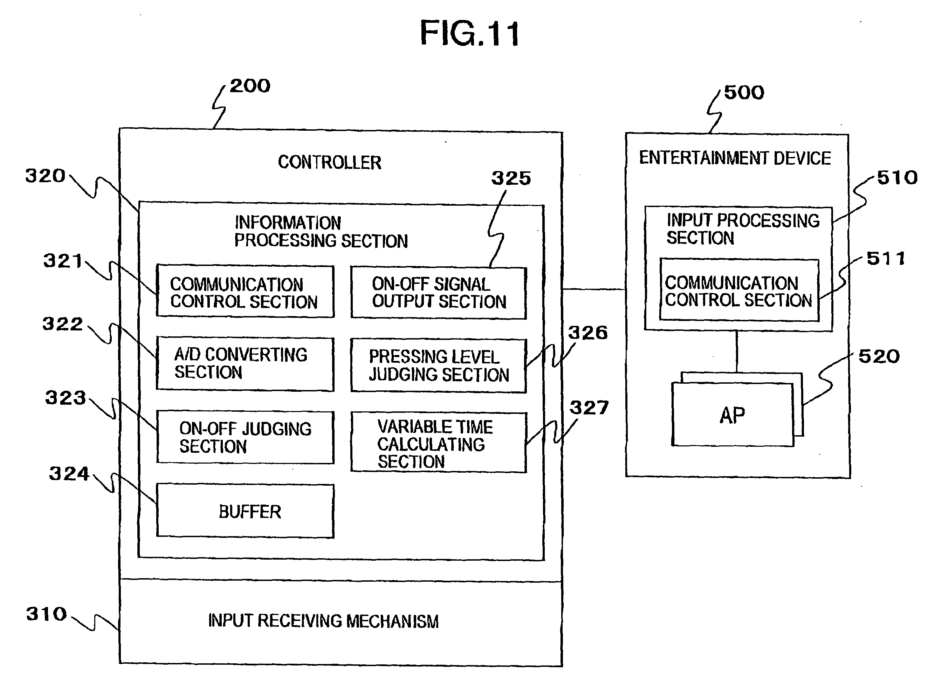

A second embodiment for performing the key repeat according to the pressing force of the operating element by utilizing the above hardware will next be explained. Fig. 11 shows a functional block diagram of the second embodiment. In this embodiment, the controller 200 outputs an on-off signal by judging the pressing level. The same reference numerals are used with respect to the same configuration as the first embodiment, and overlapping explanations are omitted here.

The controller 200 has an input receiving mechanism 310 and an information processing section 320. The information processing section 320 has a communication control section 321, an A/D converting section 322, an on-off judging section 323, a buffer 324, an on-off signal output section 325, a pressing level judging section 326 and a variable time calculating section 327.

The buffer 324 stores on-off information outputted from the on-off judging section 323, and the kind of a signal outputted from the on-off signal output section 325. The buffer 324 may have a capacity similar to that of the buffer 513 in the first embodiment mode.

The communication control section 321 controls communication with an entertainment device 500. For example, the communication control section 321 outputs information outputted from the on-off judging section 323 and the pressing level judging section 326 so as to notify this information to the entertainment device 500. The communication control section 321 also receives commands from the entertainment device 500.

The on-off signal output section 325 outputs an on-signal showing a pressing state of an operating element, or an off-signal showing an unpressing state of the operating element. Specific processing of the on-off signal output section 325 is similar to that of the on-off signal output section 514 in the first embodiment. The on-off signal output section 325 also stores the kind of an outputted signal to the buffer 324,

The pressing level judging section 326 judges the degree of pressing force when the operating element is pressed. Concrete processing of the pressing level judging section 326 is similar to that in the first embodiment.

The variable time calculating section 327 calculates a variable time when a key repeat is outputted. Specific processing of the variable time calculating section 327 is similar to that of the variable time calculating section 515 in the first embodiment.

The entertainment device 500 has an input processing section 510 having a communication control section 511, and also has an application 520.

The communication control section 511 controls communication with the controller 200. For example, the communication control section 511 outputs commands to the controller 200. The communication control section 511 also receives information showing a pressing level from the controller 200 and on-off of the operating button 221.

Thus, the key repeat can be outputted in the controller 200.

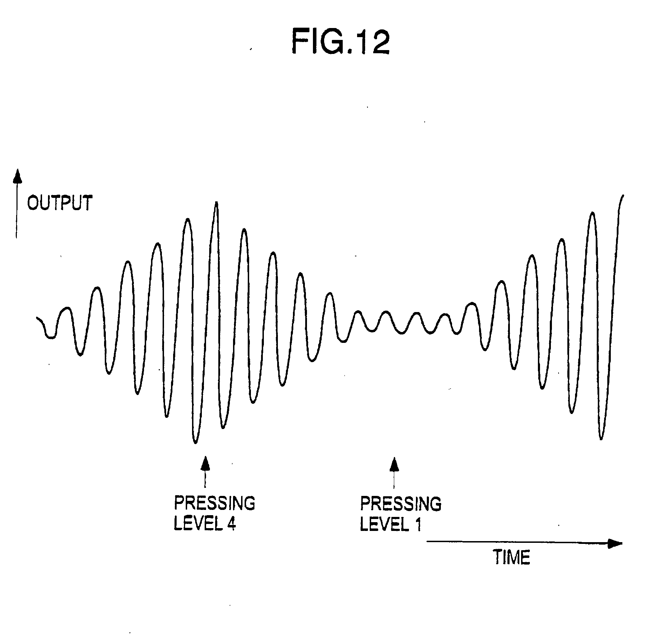

In the above example, the case where the cursor is moved as an example is explained as processing of the application 520, but no application range of the invention is limited to this case. For example, in processing for outputting a sound, a sound of high frequency may be outputted at a strong pressing force time, and a sound of low frequency may be outputted at a weak pressing force time. Further, strength of the pressing force may be also set to correspond to strength of the sound. Fig. 12 typically shows the waveform of a sound outputted when the sound is changed in frequency level.

In each configuration explained in the above embodiments, a combination can be changed, added, omitted, etc. as much as possible.

In accordance with the invention, an output operation according to the pressing force of the operating element can be performed.

## Claims

1. An electronic device connected to an input receiver having an operating element for receiving a pressing operation, and comprising:
a receiving section for receiving information outputted by said input receiver and showing the degree of pressing force received by said operating element; and
an output section for changing an output mode of information to be outputted in accordance with the degree of the pressing force determined by the information showing the degree of said pressing force received by said receiving section.

2. An electronic device connected to an input receiver having an operating element for receiving a pressing operation and also connected to a display unit, and comprising:
a receiving section for receiving information outputted from said input receiver; and
a display control section for controlling an operation of said display unit;
wherein when a cursor is displayed in said display unit and said receiving section receives information showing the degree of pressing force received by the operating element allocated in a movement of said cursor, said display control section moves said cursor displayed in said display unit at a moving speed according to the degree of the pressing force determined by the information showing the degree of said pressing force.

3. An electronic device connected to an input receiver having an operating element for receiving a pressing operation, comprising:
a receiving section for receiving on-off information showing an on-state indicative of pressing of said operating element or an off-state indicative of unpressing of said operating element, and pressing level information showing the degree of pressing force received by said operating element, both on-off and pressing level information being outputted from said input receiver;
an output section for outputting a pulse signal at a given time interval when said on-off information received by said receiving section shows the on-state and said receiving section continuously receives information showing said on-state for a predetermined judging time or more; and
a changing section for changing at least one of said judging time and said time interval in accordance with the pressing level determined by said pressing level information received by said receiving section.

4. A method for changing output information of an electronic device connected to an input receiver having an operating element for receiving a pressing operation, comprising the steps of:
receiving information showing the degree of pressing force received by said operating element and outputted from said input receiver; and
outputting information changed in mode in accordance with the degree of the pressing force determined by said received information showing the degree of the pressing force.

5. A recording medium for recording a computer program and able to be read by a computer;
wherein said computer program causes an electronic device connected to an input receiver having an operating element for receiving a pressing operation to executes the following processings:
processing for receiving information showing the degree of pressing force received by said operating element and outputted from said input receiver; and
processing for outputting information changed in mode in accordance with the degree of the pressing force determined by said received information showing the degree of said pressing force.

6. A computer program for causing an electronic device connected to an input receiver having an operating element for receiving a pressing operation to execute the following processings:
processing for receiving information showing the degree of pressing force received by said operating element and outputted from said input receiver; and
processing for outputting information changed in mode in accordance with the degree of the pressing force determined by said received information showing the degree of said pressing force.

7. An input receiver comprising:
an output section for outputting a pulse signal at a predetermined time interval when an operating element is in a pressing state for a predetermined judging time or more;
a measuring section for measuring pressing force received from said operating element when said operating element is in the pressing state; and
a changing section for changing at least one of said judging time and said time interval in accordance with measuring results of said measuring section.

8. An input receiver comprising:
an operating element for receiving a pressing operation from the exterior;
a pressure sensitive element for outputting an analog signal according to pressing force received from said operating element;
a discriminating section for discriminating whether an on-state or an off-state showing pressing or unpressing of said operating element on the basis of the analog signal outputted from said pressure sensitive element;
an output section for outputting a pulse signal at a predetermined time interval when said operating element is in said on-state as discriminating results of said discriminating section, and is continuously in said on-state for a predetermined judging time or more; and
a changing section for changing at least one of said judging time and said time interval in accordance with the analog signal outputted from said pressure sensitive element.

9. An input receiver comprising:
an operating element for receiving a pressing operation from the exterior;
a pressure sensitive element for outputting an analog signal according to received pressing force when said operating element is in a pressing state;
an on-off discriminating section for discriminating whether an on-state or an off-sate showing pressing or unpressing of said operating element on the basis of the analog signal outputted by said pressure sensitive element;
a pressure-level discriminating section for discriminating a pressure level indicating a degree of the pressing force in accordance with the analog signal outputted by said pressure sensitive element; and
an output section for externally outputting information on discriminating results of said on-off and pressure-level discriminating sections.
